(19) 

Europäisches
Patentamt

European
Patent Office

Office européen
des brevets

(11) **EP 4 485 087 B1**

(12) **EUROPEAN PATENT SPECIFICATION**

(45) Date of publication and mention
of the grant of the patent:
**25.02.2026 Bulletin 2026/09**

(21) Application number: **24183505.7**

(22) Date of filing: **20.06.2024**

(51) International Patent Classification (IPC):
**G04B 19/10** (2006.01)   **G02B 5/26** (2006.01)
**G02B 5/28** (2006.01)   **G04B 37/22** (2006.01)
**G04B 45/00** (2006.01)   G04B 19/04 (2006.01)

(52) Cooperative Patent Classification (CPC):
**G04B 45/0015; G02B 5/286; G04B 19/10;**
**G04B 37/223;** G04B 19/042; G04B 19/12

(54) **WATCH COMPONENT AND WATCH**

UHRENKOMPONENTE UND UHR

COMPOSANT DE MONTRE ET MONTRE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **22.06.2023 JP 2023102378**

(43) Date of publication of application:
**01.01.2025 Bulletin 2025/01**

(73) Proprietor: **Seiko Epson Corporation**
**Tokyo 160-8801 (JP)**

(72) Inventor: **FUJI, Tsubasa**
**Suwa-shi, 392-8502 (JP)**

(74) Representative: **Lewis Silkin LLP**
**Arbor**
**255 Blackfriars Road**
**London SE1 9AX (GB)**

(56) References cited:
**CN-A- 112 445 117     JP-A- 2018 124 267**

**Description**

The present application is based on, and claims priority from JP Application Serial Number 2023-102378, filed June 22, 2023

BACKGROUND

1. Technical Field

The present disclosure relates to a watch component and a watch.

2. Related Art

JP-A-2018-124267 discloses a watch component in which a toning film for adjusting a color tone is stacked on a base plate serving as a metallic luster portion.

Regarding the watch component in JP-A-2018-124267, excellent aesthetics can be ensured by adjusting a color tone of the appearance with the metallic luster portion and the toning film without using a noble metal as a main material.

JP-A-2018-124267 can provide noble-metal-like aesthetics, but there is a problem that it is difficult to express a high-chroma color tone. CN112445117A disclose a watch component comprising a base material, wherein a multilayer film covers a portion of the base material of the watch component, and wherein the multilayer includes a color film adjusting composed of an oxide or a fluoride layer.

SUMMARY

According to an aspect of the present disclosure, a watch component includes a base material and a multilayer film covering at least a portion of the base material, wherein the multilayer film includes a color-adjusting film that is composed of an oxide layer or a fluoride layer and that is formed by dry plating, and the color-adjusting film includes a first color-adjusting film having a refractive index of 2.0 or more, a second color-adjusting film having a refractive index of 1.5 or more and less than 2.0, and a third color-adjusting film having a refractive index of less than 1.5.

According to an aspect of the present disclosure, a watch includes the above-described watch component.

BRIEF DESCRIPTION OF THE DRAWINGS

FIG. 1 is a front view illustrating a watch according to an embodiment.
FIG. 2 is a sectional view illustrating a main portion of a dial according to the embodiment.

DESCRIPTION OF EMBODIMENTS

Embodiment

A watch 1 according to an embodiment of the present disclosure will be described below with reference to the drawings.

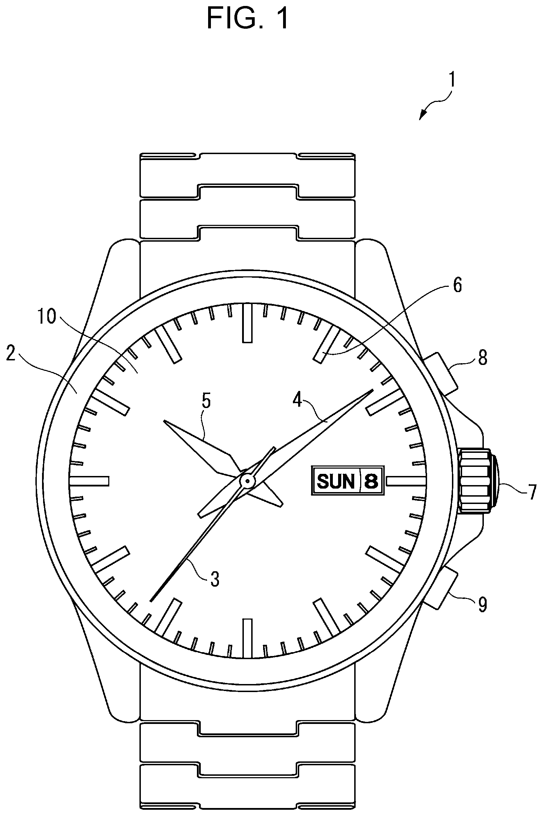

FIG. 1 is a front view illustrating the watch 1. In the present embodiment, the watch 1 is configured to be a wristwatch that is put on a wrist of a user.

As illustrated in FIG. 1, the watch 1 includes a metal case 2. In addition, a disc-like dial 10, a seconds hand 3, a minute hand 4, an hour hand 5, a crown 7, an A button 8, and a B button 9 are included in the interior of the case 2. In this regard, the dial 10 is an example of the watch component according to the present disclosure.

The dial 10 is provided with hour marks 6 to indicate a time.

Dial

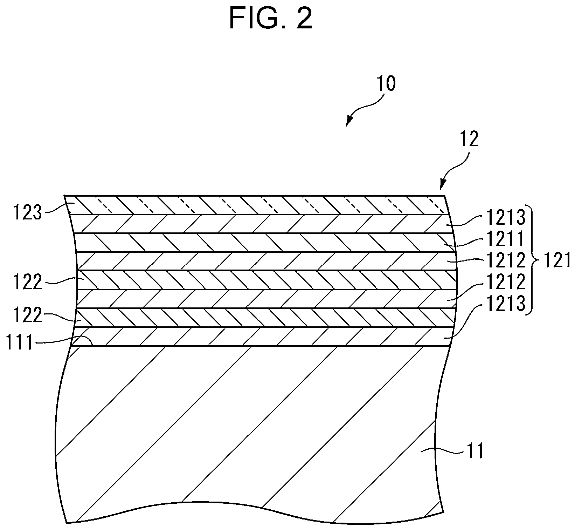

FIG. 2 is a sectional view illustrating a main portion of the dial 10.

As illustrated in FIG. 2, the dial 10 includes a base material 11 and a multilayer film 12.

In the present embodiment, the base material 11 is entirely covered with the multilayer film 12. In this regard, the dial 10 is not limited to the above-described configuration. For example, the multilayer film 12 may be stacked so as to cover a portion of the surface 111 of the base material 11.

Base material

A material for forming the base material 11 is composed of, for example, a metal, such as iron, brass, or aluminum, or a resin. In this regard, when the base material 11 is composed of a resin, the resin may be a nontransparent resin that does not pass light or a transparent resin that passes light.

Multilayer film

The multilayer film 12 is configured to include a color-adjusting film 121, a color-absorbing film 122, and a protective film 123 and is stacked on the surface 111 of the base material 11.

Color-adjusting film

The color-adjusting film 121 is a film for adjusting a color tone due to optical interference. In the present embodiment, the color-adjusting film 121 is composed of an oxide layer or a fluoride layer and is formed by dry plating. In addition, the color-adjusting film 121 includes a first color-adjusting film 1211, a second color-adjusting film 1212, and a third color-adjusting film 1213.

The first color-adjusting film 1211 is composed of a material containing at least one selected from the group consisting of $Ta_2O_5$, $TiO$, $TiO_2$, $TiO_3$, $Ti_2O_3$, $Ti_2O_5$, $Ti_3O_5$, $ZrO_2$, and $Nb_2O_5$ and is formed so as to have a refractive index of 2.0 or more. Accordingly, the range of the color tone that can be expressed by the base material 11 can be further broadened, and since these inorganic materials have high chemical stability, the stability of the appearance and the durability of the base material 11 can be increased.

In this regard, in the present disclosure, the refractive index is denoted as a value obtained by dividing a propagation rate of light in a vacuum by a propagation rate of light in a substance.

In addition, in the present embodiment, it is preferable that the first color-adjusting film 1211 be formed so as to have a thickness of 50 nm or more. According to such a configuration, colors of a broad hue, such as green, yellow, and red, can be readily expressed.

In this regard, in the multilayer film 12, only one layer of first color-adjusting film 1211 may be formed, or a plurality of first color-adjusting films 1211 may be formed.

The second color-adjusting film 1212 is composed of a material containing at least one selected from the group consisting of $SiO$, $Al_2O_3$, $MgO$, $SnO_2$, $YF_3$, $LaF_3$, $CeF_3$, and $NdF_3$ and is formed so as to have a refractive index of 1.5 or more and less than 2.0. Accordingly, the range of the color tone that can be expressed by the base material 11 can be further broadened, and since these inorganic materials have high chemical stability, the stability of the appearance and the durability of the base material 11 can be increased.

In addition, in the present embodiment, the second color-adjusting film 1212 is preferably formed so as to have a thickness of preferably 100 nm or more and more preferably formed so as to have a thickness of 200 nm or more.

In this regard, in the multilayer film 12, only one layer of second color-adjusting film 1212 may be formed, or a plurality of second color-adjusting films 1212 may be formed. When a plurality of second color-adjusting films 1212 are formed, at least one layer thereof may be formed so as to have a thickness of 200 nm or more. Further, one layer of the plurality of second color-adjusting films 1212 may be formed so as to have a larger thickness than a layer constituting the first color-adjusting film 1211 and the third color-adjusting film 1213.

The third color-adjusting film 1213 is composed of a material containing at least one selected from the group consisting of $SiO_2$, $AlF_3$, $MgF_2$, and $BaF_2$ and is formed so as to have a refractive index of less than 1.5. Accordingly, the range of the color tone that can be expressed by the base material 11 can be further broadened, and since these inorganic materials have high chemical stability, the stability of the appearance and the durability of the base material 11 can be increased.

In addition, in the present embodiment, it is preferable that the third color-adjusting film 1213 be formed so as to have a thickness of 50 nm or more. According to such a configuration, colors of a broad hue, such as green, yellow, and red, can be readily expressed.

In this regard, in the multilayer film 12, only one layer of third color-adjusting film 1213 may be formed, or a plurality of third color-adjusting films 1213 may be formed. Color-absorbing film

The color-absorbing film 122 is composed of a metal and is formed by dry plating. More specifically, the color-absorbing film 122 is composed of a material containing at least one selected from the group consisting of Ag, Pt, Au, Al, Cr, Ni, Sn, Fe, and Ti. Accordingly, the dial 10 having high aesthetics can be provided. In this regard, in the multilayer film 12, only one layer of color-absorbing film 122 may be formed, or a plurality of color-absorbing films 122 may be formed. Further, in the present embodiment, the multilayer film 12 is formed so that the total number of layers of the color-adjusting film 121 and the color-absorbing film 122 is less than 10.

Protective film

The protective film 123 is a transparent layer stacked on the surface side of the multilayer film 12. In the present embodiment, the protective film 123 is formed of a transparent resin such as acryl.

Next, Examples of the present disclosure will be described.

Example 1

In Example 1, a multilayer film presented in Table 1 was formed on the surface of a base material by dry plating.

As presented in Table 1, in Example 1, one layer of first color-adjusting film having a refractive index of 2.20 was formed of $Nb_2O_5$. In addition, two layers of second color-adjusting film having a refractive index of 1.64 were formed of $Al_2O_3$. Further, two layers of third color-adjusting film having a refractive index of 1.47 were formed of $SiO_2$. In such an instance, the second color-adjusting film constituting the third layer was formed so as to have a thickness of 207.6 nm. In this regard, the second color-adjusting film constituting the third layer was formed so as to have the largest thickness of the layers constituting the multilayer film.

As a result, regarding a dial in Example 1, the hue was red, the brightness L* was 37, the chroma C* was 53, and the hue angle h* was 13. That is, it was indicated that the dial having a hue of red, brightness L* of 30 or more, and chroma C* of 50 or more can be obtained according to the configuration of the multilayer film in Example 1. Consequently, in Example 1 in which the thickness of the second color-adjusting film constituting the third layer was set to be 200 nm or more, the chroma C* of the dial was 50 or more, and it was indicated that the dial having very high chroma can be obtained. Further, in Example 1, the total number of layers of the color-adjusting film and the color-absorbing film was 7, and it was indicated that high chroma can be realized with a small number of layers of less than 10.

In this regard, in the present disclosure, the brightness L* is a value of brightness in the L*a*b* color space specified by CIE (Commission Internationale d'Eclairage). The value of L* of "0" is the brightness of a substance that does not reflect light at all (completely absorb light), and the value of L* of "100" expresses the value of brightness of white that completely reflects light. In addition, the chroma C* is an indicator of the vividness of a color and is represented by a distance between a point expressed by a* and b* and the origin corresponding to an achromatic color.

$$C* = \sqrt{(a*)^2 + (b*)^2}$$ Formula (1)

Table 1

|  |  | Type of layer | Material | Thickness (nm) | Refractive index |
|---|---|---|---|---|---|
| Eighth layer | | Protective layer | epoxy resin | - | 1.60 |
| Seventh layer | | Third color-adjusting film | $SiO_2$ | 114.4 | 1.47 |
| Sixth layer | | First color-adjusting film | $Nb_2O_5$ | 78.8 | 2.20 |
| Fifth layer | | Second color-adjusting film | $Al_2O_3$ | 111.4 | 1.64 |
| Fourth layer | | color-absorbing film | Cr | 7.3 | 2.70 |
| Third layer | | Second color-adjusting film | $Al_2O_3$ | 207.6 | 1.64 |
| Second layer | | color-absorbing film | Cr | 68.4 | 3.10 |
| First layer | | Third color-adjusting film | $SiO_2$ | 100 | 1.47 |
|  | | | Total thickness | 687.9 | |

Example 2

In Example 2, a multilayer film presented in Table 2 was formed on the surface of a base material by dry plating.

As presented in Table 2, in Example 2, one layer of first color-adjusting film having a refractive index of 2.20 was formed of $Nb_2O_5$. In addition, two layers of second color-adjusting film having a refractive index of 1.64 were formed of $Al_2O_3$. Further, one layer of third color-adjusting film having a refractive index of 1.47 was formed of $SiO_2$. In such an instance, the second color-adjusting film constituting the fourth layer was formed so as to have a thickness of 117.8 nm. In this regard, in Example 2, the third color-adjusting film constituting the sixth layer was formed so as to have the largest thickness of the layers constituting the multilayer film.

As a result, regarding a dial in Example 2, the hue was violet, the brightness L* was 31, the chroma C* was 38, and the hue angle h* was -45. That is, it was indicated that the dial having a hue of violet, brightness L* of 30 or more, and chroma C* of 30 or more can be obtained according to the configuration of the multilayer film in Example 2. Consequently, in Example 2 in which the thickness of the second color-adjusting film constituting the fourth layer was set to be 100 nm or more, the chroma C* of the dial was 30 or more, and it was indicated that the dial having very high chroma can be obtained. Further, in Example 2, the total number of layers of the color-adjusting film and the color-absorbing film was 6, and it was indicated that high chroma can be realized with a small number of layers of less than 10.

Table 2

|  | Type of layer | Material | Thickness (nm) | Refractive index |
|---|---|---|---|---|
| Seventh layer | Protective layer | epoxy resin | - | 1.60 |
| Sixth layer | Third color-adjusting film | $SiO_2$ | 146.1 | 1.47 |
| Fifth layer | First color-adjusting film | $Nb_2O_5$ | 93.7 | 2.20 |
| Fourth layer | Second color-adjusting film | $Al_2O_3$ | 117.8 | 1.64 |
| Third layer | color-absorbing film | Cr | 12.7 | 2.70 |
| Second layer | Second color-adjusting film | $Al_2O_3$ | 88.8 | 1.64 |
| First layer | color-absorbing film | Cr | 71.2 | 3.10 |
|  |  | Total thickness | 530.3 |  |

Example 3

In Example 3, a multilayer film presented in Table 3 was formed on the surface of a base material by dry plating.
As presented in Table 3, in Example 3, one layer of first color-adjusting film having a refractive index of 2.35 was formed of $TiO_2$. In addition, three layers of second color-adjusting film having a refractive index of 1.64 were formed of $Al_2O_3$. Further, one layer of third color-adjusting film having a refractive index of 1.47 was formed of $SiO_2$. In such an instance, the second color-adjusting film constituting the sixth layer was formed so as to have a thickness of 168.8 nm. In this regard, the second color-adjusting film constituting the sixth layer was formed so as to have the largest thickness of the layers constituting the multilayer film.
As a result, regarding a dial in Example 3, the hue was green, the brightness L* was 88, the chroma C* was 45, and the hue angle h* was 102. That is, it was indicated that, the dial having a hue of green, brightness L* of 80 or more, and chroma C* of 40 or more can be obtained according to the configuration of the multilayer film in Example 3. Consequently, in Example 3 in which the thickness of the second color-adjusting film constituting the sixth layer was set to be 150 nm or more, the chroma C* of the dial was 40 or more, and it was indicated that the dial having very high chroma can be obtained. Further, in Example 3, the total number of layers of the color-adjusting film and the color-absorbing film was 7, and it was indicated that high chroma can be realized with a small number of layers of less than 10.

Table 3

|  | Type of layer | Material | Thickness (nm) | Refractive index |
|---|---|---|---|---|
| Eighth layer | Protective layer | epoxy resin | - | 1.60 |
| Seventh layer | Third color-adjusting film | $SiO_2$ | 95.3 | 1.47 |
| Sixth layer | Second color-adjusting film | $Al_2O_3$ | 168.8 | 1.64 |
| Fifth layer | First color-adjusting film | $TiO_2$ | 62.0 | 2.35 |
| Fourth layer | Second color-adjusting film | $Al_2O_3$ | 94.9 | 1.64 |
| Third layer | color-absorbing film | Cr | 8.4 | 2.70 |
| Second layer | Second color-adjusting film | $Al_2O_3$ | 85.1 | 1.64 |
| First layer | color-absorbing film | Cr | 68.3 | 3.10 |
|  |  | Total thickness | 582.8 |  |

Example 4

In Example 4, a multilayer film presented in Table 4 was formed on the surface of a base material by dry plating.

As presented in Table 4, in Example 4, two layers of first color-adjusting film having a refractive index of 2.20 were formed of $Nb_2O_5$. In addition, one layer of second color-adjusting film having a refractive index of 1.64 was formed of $Al_2O_3$. Further, one layer of third color-adjusting film having a refractive index of 1.47 was formed of $SiO_2$. In such an instance, the second color-adjusting film constituting the fourth layer was formed so as to have a thickness of 195.2 nm. In this regard, the second color-adjusting film constituting the fourth layer was formed so as to have the largest thickness of the layers constituting the multilayer film.

As a result, regarding a dial in Example 4, the hue was indigo, the brightness L* was 28, the chroma C* was 42, and the hue angle h* was -88. That is, it was indicated that, the dial having a hue of indigo, brightness L* of 25 or more, and chroma C* of 40 or more can be obtained according to the configuration of the multilayer film in Example 4. Consequently, in Example 4 in which the thickness of the second color-adjusting film constituting the fourth layer was set to be 150 nm or more, the chroma C* of the dial was 40 or more, and it was indicated that the dial having very high chroma can be obtained. Further, in Example 4, the total number of layers of the color-adjusting film and the color-absorbing film was 6, and it was indicated that high chroma can be realized with a small number of layers of less than 10.

Table 4

|  | Type of layer | Material | Thickness (nm) | Refractive index |
|---|---|---|---|---|
| Seventh layer | Protective layer | epoxy resin | - | 1.60 |
| Sixth layer | Third color-adjusting film | $SiO_2$ | 88.6 | 1.47 |
| Fifth layer | First color-adjusting film | $Nb_2O_5$ | 23.1 | 2.20 |
| Fourth layer | Second color-adjusting film | $Al_2O_3$ | 195.2 | 1.64 |
| Third layer | color-absorbing film | Cr | 9.1 | 2.70 |
| Second layer | First color-adjusting film | $Nb_2O_5$ | 54.6 | 2.20 |
| First layer | color-absorbing film | Cr | 63.3 | 3.10 |
|  |  | Total thickness | 433.8 |  |

Modified example

In this regard, the present disclosure is not limited to the above-described embodiment, and modifications, improvements, and the like within a range in which the purpose of the present disclosure can be achieved are included in the present disclosure.

In the above-described embodiment, the protective film 123 is stacked on the surface side of the multilayer film 12, but the protective film is not limited to this. The present disclosure also includes an instance in which no protective film is stacked on the surface side of the multilayer film.

In the above-described embodiment, the watch component according to the present disclosure is configured to serve as the dial 10, but the watch component is not limited to this. For example, the watch component according to the present disclosure may be configured to serve as any one of a case, a band, a dial ring, a bezel, a movement, a hand, an abbreviation, a moon phase disk, and a moon phase wheel.

Outline of the present disclosure

A watch component according to the present disclosure includes a base material and a multilayer film covering at least a portion of the base material, wherein the multilayer film includes a color-adjusting film that is composed of an oxide layer or a fluoride layer and that is formed by dry plating, and the color-adjusting film includes a first color-adjusting film having a refractive index of 2.0 or more, a second color-adjusting film having a refractive index of 1.5 or more and less than 2.0, and a third color-adjusting film having a refractive index of less than 1.5.

In the present disclosure, the color-adjusting film formed by dry plating includes a first color-adjusting film having a refractive index of 2.0 or more, a second color-adjusting film having a refractive index of 1.5 or more and less than 2.0, and a third color-adjusting film having a refractive index of less than 1.5. Accordingly, a watch component capable of expressing a high-chroma color tone can be provided.

In the watch component according to the present disclosure, the second color-adjusting film may have a thickness of 100 nm or more that is larger than a thickness of the first color-adjusting film and a thickness of the third color-adjusting film.

Accordingly, a high-chroma watch component having a chroma C* of 30 or more can be provided.

In the watch component according to the present disclosure, the second color-adjusting film may have a thickness of 200 nm or more.

Accordingly, a higher-chroma watch component having a chroma C* of 50 or more can be provided.

In the watch component according to the present disclosure, the first color-adjusting film and the third color-adjusting film may have a thickness of 50 nm or more.

Accordingly, colors of a broad hue, such as green, yellow, and red, can be readily expressed.

In the watch component according to the present disclosure, the first color-adjusting film may be composed of a material containing at least one selected from the group consisting of $Ta_2O_5$, $TiO$, $TiO_2$, $TiO_3$, $Ti_2O_3$, $Ti_2O_5$, $Ti_3O_5$, $ZrO_2$, and $Nb_2O_5$.

Accordingly, the range of the color tone that can be expressed by the base material can be further broadened. Further, since these inorganic materials have high chemical stability, the stability of the appearance and the durability of the base material can be increased.

In the watch component according to the present disclosure, the second color-adjusting film may be composed of a material containing at least one selected from the group consisting of $SiO$, $Al_2O_3$, $MgO$, $SnO_2$, $YF_3$, $LaF_3$, $CeF_3$, and $NdF_3$.

Accordingly, the range of the color tone that can be expressed by the base material can be further broadened. Further, since these inorganic materials have high chemical stability, the stability of the appearance and the durability of the base material can be increased.

In the watch component according to the present disclosure, the third color-adjusting film may be composed of a material containing at least one selected from the group consisting of $SiO_2$, $AlF_3$, $MgF_2$, and $BaF_2$.

Accordingly, the range of the color tone that can be expressed by the base material can be further broadened. Further, since these inorganic materials have high chemical stability, the stability of the appearance and the durability of the base material can be increased.

In the watch component according to the present disclosure, the multilayer film may include a color-absorbing film composed of a metal layer, and the total number of layers of the color-adjusting film and the color-absorbing film may be less than 10.

Accordingly, high chroma can be realized with a small number of layers of less than 10.

In the watch component according to the present disclosure, the color-absorbing film may be composed of a material containing at least one selected from the group consisting of Ag, Pt, Au, Al, Cr, Ni, Sn, Fe, and Ti.

Accordingly, since the color-absorbing film is composed of a metal, the watch component having high aesthetics can be provided.

A watch according to the present disclosure includes the above-described watch component.

**Claims**

1. A watch component comprising:

   a base material; and
   a multilayer film covering at least a portion of the base material, wherein
   the multilayer film includes a color-adjusting film that is composed of an oxide layer or a fluoride layer and that is formed by dry plating, and wherein the watch component is **characterised in that**
   the color-adjusting film includes

   a first color-adjusting film having a refractive index of 2.0 or more,
   a second color-adjusting film having a refractive index of 1.5 or more and less than 2.0, and
   a third color-adjusting film having a refractive index of less than 1.5.

2. The watch component according to claim 1, wherein
   the second color-adjusting film has a thickness of 100 nm or more that is larger than a thickness of the first color-adjusting film and a thickness of the third color-adjusting film.

3. The watch component according to claim 2, wherein
   the second color-adjusting film has a thickness of 200 nm or more.

4. The watch component according to claim 1, wherein

the first color-adjusting film and the third color-adjusting film have a thickness of 50 nm or more.

5.  The watch component according to claim 1, wherein
the first color-adjusting film is composed of a material containing at least one selected from the group consisting of $Ta_2O_5$, $TiO$, $TiO_2$, $TiO_3$, $Ti_2O_3$, $Ti_2O_5$, $Ti_3O_5$, $ZrO_2$, and $Nb_2O_5$.

6.  The watch component according to claim 1, wherein
the second color-adjusting film is composed of a material containing at least one selected from the group consisting of $SiO$, $Al_2O_3$, $MgO$, $SnO_2$, $YF_3$, $LaF_3$, $CeF_3$, and $NdF_3$.

7.  The watch component according to claim 1, wherein
the third color-adjusting film is composed of a material containing at least one selected from the group consisting of $SiO_2$, $AlF_3$, $MgF_2$, and $BaF_2$.

8.  The watch component according to claim 1, wherein

    the multilayer film includes a color-absorbing film composed of a metal layer, and
    the total number of layers of the color-adjusting film and the color-absorbing film is less than 10.

9.  The watch component according to claim 8, wherein
the color-absorbing film is composed of a material containing at least one selected from the group consisting of Ag, Pt, Au, Al, Cr, Ni, Sn, Fe, and Ti.

10. A watch comprising the watch component according to claim 1.


**Patentansprüche**

1.  Uhrenkomponente, umfassend:

    ein Basismaterial; und
    einen mehrschichtigen Film, der mindestens einen Abschnitt des Basismaterials abdeckt, wobei
    der mehrschichtige Film einen Farbanpassungsfilm enthält, der aus einer Oxidschicht oder einer Fluoridschicht gebildet ist und der durch Trockenplattieren gebildet wird, und wobei die Uhrenkomponente **dadurch gekennzeichnet ist, dass**
    der Farbanpassungsfilm enthält

    einen ersten Farbanpassungsfilm mit einem Brechungsindex von 2,0 oder mehr,
    einen zweiten Farbanpassungsfilm mit einem Brechungsindex von 1,5 oder mehr und weniger als 2,0 und
    einen dritten Farbanpassungsfilm mit einem Brechungsindex von weniger als 1,5.

2.  Uhrenkomponente nach Anspruch 1, wobei
der zweite Farbanpassungsfilm eine Dicke von 100 nm oder mehr aufweist, die größer ist als eine Dicke des ersten Farbanpassungsfilms und eine Dicke des dritten Farbanpassungsfilms.

3.  Uhrenkomponente nach Anspruch 2, wobei
der zweite Farbanpassungsfilm eine Dicke von 200 nm oder mehr aufweist.

4.  Uhrenkomponente nach Anspruch 1, wobei
der erste Farbanpassungsfilm und der dritte Farbanpassungsfilm eine Dicke von 50 nm oder mehr aufweisen.

5.  Uhrenkomponente nach Anspruch 1, wobei
der erste Farbanpassungsfilm aus einem Material gebildet ist, das mindestens eines, ausgewählt aus der Gruppe bestehend aus $Ta_2O_5$, $TiO$, $TiO_2$, $TiO_3$, $Ti_2O_3$, $Ti_2O_5$, $Ti_3O_5$, $ZrO_2$ und $Nb_2O_5$ beinhaltet.

6.  Uhrenkomponente nach Anspruch 1, wobei
der zweite Farbanpassungsfilm aus einem Material gebildet ist, das mindestens eines, ausgewählt aus der Gruppe bestehend aus $SiO$, $Al_2O_3$, $MgO$, $SnO_2$, $YF_3$, $LaF_3$, $CeF_3$ und $NdF_3$ beinhaltet.

**7.** Uhrenkomponente nach Anspruch 1, wobei
der dritte Farbanpassungsfilm aus einem Material gebildet ist, das mindestens eines, ausgewählt aus der Gruppe bestehend aus $SiO_2$, $AlF_3$, $MgF_2$ und $BaF_2$ beinhaltet.

**8.** Uhrenkomponente nach Anspruch 1, wobei

der mehrschichtige Film einen farbabsorbierenden Film enthält, der aus einer Metallschicht gebildet ist und die Gesamtzahl von Schichten des Farbanpassungsfilms und des farbabsorbierenden Films kleiner als 10 ist.

**9.** Uhrenkomponente nach Anspruch 8, wobei
der farbabsorbierende Film aus einem Material gebildet ist, das mindestens eines, ausgewählt aus der Gruppe bestehend aus Ag, Pt, Au, Al, Cr, Ni, Sn, Fe und Ti enthält.

**10.** Uhr, die die Uhrenkomponenten nach Anspruch 1 umfasst.


**Revendications**

**1.** Composant de montre comprenant :

un matériau de base ; et
un film multicouche recouvrant au moins une partie du matériau de base, dans lequel
le film multicouche inclut un film de réglage de couleur, lequel est composé d'une couche d'oxyde ou d'une couche de fluorure et lequel est formé par plaquage à sec, dans lequel le composant de montre est **caractérisé en ce que**
le film de réglage de couleur inclut

un premier film de réglage de couleur présentant un indice de réfraction de 2,0 ou plus,
un deuxième film de réglage de couleur présentant un indice de réfraction de 1,5 ou plus et inférieur à 2,0, et
un troisième film de réglage de couleur présentant un indice de réfraction inférieur à 1,5.

**2.** Composant de montre selon la revendication 1, dans lequel
le deuxième film de réglage de couleur présente une épaisseur de 100 nm ou plus, laquelle est supérieure à une épaisseur du premier film de réglage de couleur et à une épaisseur du troisième film de réglage de couleur.

**3.** Composant de montre selon la revendication 2, dans lequel
le deuxième film de réglage de couleur présente une épaisseur de 200 nm ou plus.

**4.** Composant de montre selon la revendication 1, dans lequel
le premier film de réglage de couleur et le troisième film de réglage de couleur présentent une épaisseur de 50 nm ou plus.

**5.** Composant de montre selon la revendication 1, dans lequel
le premier film de réglage de couleur est composé d'un matériau contenant l'un au moins sélectionné à partir du groupe comprenant le $Ta_2O_5$, le $TiO$, le $TiO_2$, le $TiO_3$ le $Ti_2O_3$, $Ti_2O_5$, le $Ti_3O_5$, le $ZrO_2$ et le $Nb_2O_5$.

**6.** Composant de montre selon la revendication 1, dans lequel
le deuxième film de réglage de couleur est composé d'un matériau contenant l'un au moins sélectionné à partir du groupe comprenant le $SiO$, l'$Al_2O_3$, le $MgO$, le $SnO_2$, l'$YF_3$, le $LaF_3$, le $CeF_3$ et le $NdF_3$.

**7.** Composant de montre selon la revendication 1, dans lequel
le troisième film de réglage de couleur est composé d'un matériau contenant l'un au moins sélectionné à partir du groupe comprenant le $SiO_2$, l'$AlF_3$, le $MgF_2$ et le $BaF_2$.

**8.** Composant de montre selon la revendication 1, dans lequel

le film multicouche inclut un film absorbant la couleur composé d'une couche métallique, et
le nombre total de couches du film de réglage de couleur et du film absorbant la couleur est inférieur à 10.

9. Composant de montre selon la revendication 8, dans lequel
le film absorbant la couleur est composé d'un matériau contenant l'un au moins sélectionné à partir du groupe comprenant l'Ag, le Pt, l'Au, l'Al, le Cr, le Ni, le Sn, le Fe et le Ti.

10. Montre comprenant le composant de montre selon la revendication 1.

# FIG. 1

# FIG. 2

**REFERENCES CITED IN THE DESCRIPTION**

**Patent documents cited in the description**

- JP 2023102378 A
- JP 2018124267 A
- CN 112445117 A